# EUROPEAN PATENT SPECIFICATION

(11) **EP 2 112 481 B1**
(45) Date of publication and mention of the grant of the patent: **13.08.2014**
(21) Application number: 08425271.7
(22) Date of filing: 21.04.2008
(51) Int. Cl.: G01F 23/04, G01F 23/24

(54) **Device for reading the engine oil level**
Vorrichtung zur Ablesung eines Motorölpegels
Dispositif de lecture du niveau d'huile d'un moteur

(43) Date of publication of application: 28.10.2009
(73) Proprietor: Iveco S.p.A., 10156 Torino (IT)
(72) Inventor: Bertozzi, Franco, 10040 Druento (IT)
(74) Representative: Cinquantini, Bruno

(56) References cited:
- US-A- 3 098 914
- US-A- 4 654 646
- US-A- 4 751 845

## Description

This invention relates to a device for reading the engine oil level suitable for both a manual and an electric reading of the engine oil level.

As known in the prior art, in the heat engines the oil collects in a sump, therefore reading the engine oil level means measuring the oil level in this sump.

At present, the measurement known in the art is carried out manually, by means of a graduated dipstick that is inserted into the sump. This manual system known in the art, however, is quite awkward, therefore during the normal usage of a vehicle, the user does not carry out the periodical manual controls, by means of the dipstick. For this reason, a second electric device for detecting the oil level has become largely widespread on the vehicles.

This electric device comprises a sensor made of a conductor element whose resistance varies when it is immersed in air or in contact with the engine oil. The variation of the electric resistance of the element, therefore, allows the reading of the oil level, by means of the interpretation and of the processing of the data by the electronic control unit. The control unit may be programmed in order to recognize the minimum and the maximum oil level and consequently to send or to display on the dashboard an alarm signal when the oil level is lower than the minimum level or is higher than the maximum level.

At present these two oil level reading systems, both the manual reading system using the graduated dipstick and the electric or electronic system using a sensor and a control unit, are used at the same time on the vehicles. The possibility to connect the control unit, which electrically measures the level, to an alarm on the dashboard allows to have an immediate reading of the oil level before every engine starting, when the starting key is turned in "accessories" position.

In many cases, however, in particular in case of industrial vehicle engines, where the oil sump in very bulky, if the manual and the electric reading devices of the oil level are placed in different points of the sump, they may display different values.

In particular, when the vehicle is not on a flat terrain, but is on a road having a longitudinal slope and/or a transversal slope, the measuring values provided by the two devices may be very different.

A drawback of the engine oil level measuring systems known in the art is therefore the fact that the two readings, manual and electric, are not consistent, because the two devices are placed in different points of the sump.

The engine oil level detected by the electric level sensor is measured and shown by means of an appropriate indicator or warning light on the dashboard, only when the engine is stopped and the key is inserted and turned, that is before the engine is started. This is because the oil has to collect in the sump in order to obtain a correct measurement, therefore the measurement is carried out with the engine stopped, and if it has just been started it is necessary to stop the engine and to wait some minutes before carrying out the measurement again, in order to allow the oil to collect into the sump.

In case the vehicle is stationary on a steep road, the displacement of the volume of the oil in the sump may cause differences, even remarkable differences, in the values obtained by the manual reading using the dipstick and in those obtained by the electronic indication provided by the sensor.

In particular, using the oil level measuring devices known in the art, it may happen that the driver turns the starting key and sees by the indicator on the dashboard that the oil level is too low, but if the measuring operation is carried out again manually by means of the graduated dipstick, the oil level would even seem to exceed the maximum level, if the vehicle is not on a flat terrain but on a slope.

The main task of this invention is to solve the drawbacks described above that affect the oil level measuring systems known in the prior art.

In particular, in the scope of this task the aim of this invention is to provide a measuring device of the engine oil level that allows to eliminate the differences between the measuring values provided respectively by the manual system using a graduated dipstick and by the electronic system using a level sensor.

A further advantage of this invention is to provide a measuring device of the oil level allowing to carry out the two measurements, the manual and the electronic one, at the same point in the oil sump, as to eliminate the differences between the two measurements.

Also, the aim of this invention is to provide a device that uniforms the indications of the minimum and of the maximum engine oil level provided by both system, as to remove any possible confusion for the user about the actual oil level.

This task and these and other purposes that will be explained below are achieved by a measuring device of the engine oil level characterized in that it comprises means for the manual measurement and means for the automatic measurement of the engine oil level.

Further characteristics and advantages of the present invention will become clear from the following detailed description, that is merely illustrative and not limitative and is shown in the figures that are attached hereto, in which:
figure 1 shows a schematic view of the device according to this invention placed in the oil sump of an engine;
figure 2 shows a detail of the extremity of the engine oil level measuring device according to this invention.

With reference to the mentioned figures, the measuring device 1 of the oil level 11 according to this invention comprises means for the manual measurement 3 and means for the automatic measurement 4 of the engine oil level.

More in detail, the device 1 according to this invention comprises a guiding tube 2 having an elongated shape suitable for being firmly inserted in the crankcase 12 by means of appropriate retaining means of the type known that are not shown in the figures. The guiding tube 2 stretches out to the crankcase part where the oil sump 10 is. The guiding tube 2 comprises said manual measurement means of the engine oil level. In particular, the guiding tube 2 is suitable for the introduction of a dipstick, preferably a metal one, indicated in the figures by the reference number 3.

On the dipstick 3 the minimum and the maximum engine oil level are indicated by means of a reference mark or line for the minimum level 3a and a reference mark or line for the maximum level 3b. This way the dipstick 3 is suitable for the manual measurement of the engine oil level according to what is known in the art.

On said guiding tube 2 are also present said means for the automatic measurement 4 of the engine oil level.

In particular, said means for the automatic measurement of the engine oil level comprise a level sensor 4. Said level sensor may be, for example, a hot wire sensor, that is a conductor wire whose resistance varies when it is immersed in air or in a different fluid.

According to this invention, the level sensor is placed on said guiding tube 2, in order to calibrate the sensor measurement as to make the sensor resistance value associated to the minimum oil level 4a and the sensor resistance value associated to the maximum oil level 4b coincide with the oil minimum 3a and maximum 3b oil level marks on the dipstick, when it is completely inserted in the guiding tube 2.

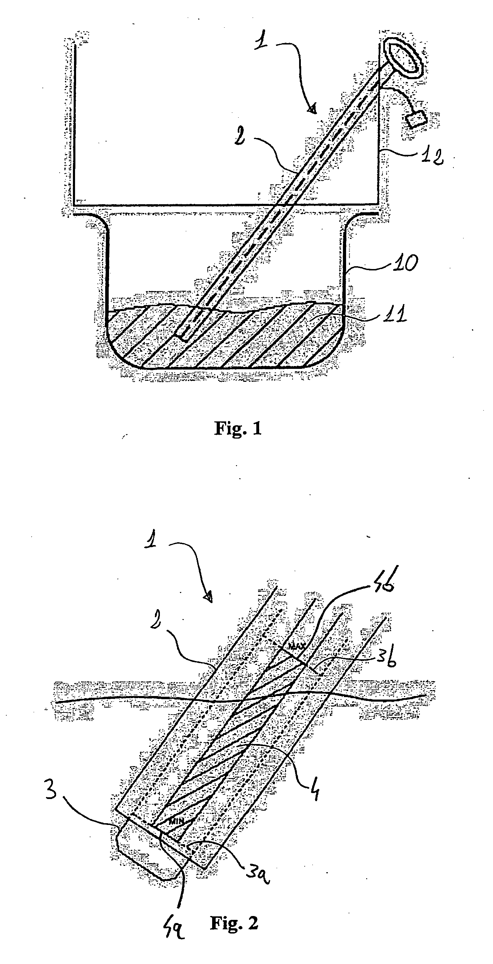

The level sensor 4 is connected to a control unit which processes the sensor resistance values and associates it to a data correspondent to the oil level, which in its turn is sent to a level indicator or to a warning light on the dashboard. Therefore the level sensor 4 may be calibrated as said by positioning its starting and ending extremities at the minimum 3a and maximum 3b level marks on the dipstick 3, as shown in figure 2, or, if the sensor has different dimensions, it may be calibrated by using the control unit.

According to a preferred embodiment of this invention, the level sensor 4 will be placed on the external surface of said guiding tube 2.

More in detail, in order to allow an easier level sensor replacement in case of malfunctioning, the level sensor 4 may be positioned on the external surface of the guiding tube 2 in a removable way, for example by means of a friction joint, or of a bayonet joint or other joint types, or using appropriate support and retaining means where said sensor may be easily inserted and retained by friction.

The device according to this invention functions as follows.

Using the dipstick 3 the user may carry out the usual manual control of the engine oil level.

The level sensor 4 is placed on the external surface of the guiding tube 2 of said dipstick. This sensor is calibrated as to provide the same oil level value indication as that the user would obtain by the manual level control using the dipstick 3, regardless of the vehicle inclination.

The device according to this invention, placing in a single point of the oil sump both level detection systems, avoids the differences between the values provided by the two systems.

Therefore it has been shown that the method for detecting the engine oil level according to the present invention achieves the purpose and the objects proposed.

In particular, it has been shown that the device according to this invention allows to obtain a single oil level indication by both the manual measurement and the electronic measurement, regardless of the position of the vehicle which may not be on a flat terrain when the measurement is carried out.

This uniform oil level indication between the two systems avoids confusion and evaluation errors by the user. Also, the device according to this invention may be duly placed at the point in the oil sump where the vehicle inclination less affects the oil level measurement, making the detection more precise in every condition.

It will be apparent to the person skilled in the art that various modifications can be conceived and reduced to practice without departing from the scope of the invention.

## Claims

1. Device (1) for measuring the engine oil level comprising means for the manual measurement (3) and a resistive type level sensor (4) measuring the engine oil level, said means for the manual measurement (3) of the oil level comprising a graduated dipstick (3), comprising at least a mark for the minimum level (3a) and a mark for the maximum level (3b), sliding into a guiding tube (2) which stretches out through the crankcase to the oil sump so that the extremity of said graduated dipstick (3) is duly immersed in the oil, **characterized in that** said level sensor (4) is placed on said guiding tube (2), and is calibrated in a way that makes the sensor resistance value associated to the minimum oil level (4a) and the sensor resistance value associated to the maximum oil level (4b) coincide with the minimum (3a) and maximum (3b) oil level marks on the dipstick (3), when it is completely inserted in the guiding tube (2), in order to read the oil level in correspondence of the same points.

2. Device (1) according to claim 1, **characterized in that** said means for the manual measurement (3) and said means for the automatic measurement (4) are suitable for measuring the oil level at the same minimum level (3a, 4a) and maximum level (3b, 4b) points.

3. Device (1) according to any of the previous claims, **characterized in that** said means for the automatic measurement (4) of the engine oil level comprise at least a level sensor (4) of the hot wire type.

4. Device (1) according to one or more previous claim, **characterized in that** said level sensor (4) is associated to an electronic control unit which processes the resistance value of the sensor itself associated to the oil level and sends it in its turn to a oil level indicator visible to the driver.

5. Device (1) according to one or more previous claim, **characterized in that** said level sensor (4) is associated to the external surface of said guiding tube (2).

6. Device (1) according to one or more previous claim, **characterized in that** said level sensor (4) is associated in a removable way to the external surface of said guiding tube (2), as to be easily replaced in case of malfunctioning.

## Patentansprüche

1. Vorrichtung (1) zum Messen des Motorölfüllstandes mit Mitteln für die manuelle Messung (3) und einem Füllstandsensor vom Widerstandstyp (4), der den Motorölfüllstand misst, wobei die Mittel für die manuelle Messung (3) des Ölfüllstandes einen skalierten Messstab (3) umfassen, der mindestens eine Marke für den Mindestfüllstand (3a) und eine Marke für den Maximalfüllstand (3b) umfasst und in ein Führungsrohr (2) gleitet, das sich durch das Kurbelgehäuse heraus zu der Ölwanne erstreckt, so dass das Ende des skalierten Messstabes (3) ordnungsgemäß in das Öl eingetaucht ist, **dadurch gekennzeichnet, dass** der Füllstandsensor (4) an dem Führungsrohr (2) angeordnet ist und in einer Weise kalibriert ist, dass bewirkt wird, dass der Sensorwiderstandswert, der dem Mindestölfüllstand (4a) zugeordnet ist, und der Sensorwiderstandswert, der dem Maximalölfüllstand (4b) zugeordnet ist, mit der Mindestölfüllstandmarke (3a) und der Maximalölfüllstandmarke (3b) an dem Messstab (3) zusammenfallen, wenn er vollständig in das Führungsrohr (2) eingesetzt ist, um den Ölfüllstand in Übereinstimmung mit den gleichen Punkten zu lesen.

2. Vorrichtung (1) nach Anspruch 1, **dadurch gekennzeichnet, dass** die Mittel für die manuelle Messung (3) und die Mittel für die automatische Messung (4) zum Messen des Ölfüllstandes an den Punkten des gleichen Mindestfüllstands (3a, 4a) und Maximalfüllstands (3b, 4b) geeignet sind.

3. Vorrichtung (1) nach einem der vorhergehenden Ansprüche, **dadurch gekennzeichnet, dass** die Mittel zur automatischen Messung (4) des Motorölfüllstandes mindestens einen Füllstandsensor (4) vom Hitzdrahttyp umfassen.

4. Vorrichtung (1) nach einem oder mehreren der vorhergehenden Ansprüche, **dadurch gekennzeichnet, dass** der Füllstandsensor (4) einer elektronischen Steuereinheit zugeordnet ist, die den Widerstandswert des Sensors selbst, der dem Ölfüllstand zugeordnet ist, verarbeitet und diesen wiederum an eine Ölfüllstandanzeige, die für den Fahrer sichtbar ist, sendet.

5. Vorrichtung (1) nach einem oder mehreren der vorhergehenden Ansprüche, **dadurch gekennzeichnet, dass** der Füllstandsensor (4) der Außenfläche des Führungsrohres (2) zugeordnet ist.

6. Vorrichtung (1) nach einem oder mehreren der vorhergehenden Ansprüche, **dadurch gekennzeichnet, dass** der Füllstandsensor (4) in einer abnehmbaren Weise der Außenfläche des Führungsrohrs (2) zugeordnet ist, um im Falle einer Fehlfunktion auf einfache Weise ersetzt werden zu können.

## Revendications

1. Dispositif (1) pour mesurer le niveau d'huile moteur comprenant des moyens pour la mesure manuelle (3) et un capteur de niveau de type résistif (4) mesurant le niveau d'huile moteur, lesdits moyens pour la mesure manuelle (3) du niveau d'huile comprenant une jauge graduée(3), comprenant au moins une marque pour le niveau minimum (3a) et une marque pour le niveau maximum (3b), glissant dans un tube de guidage (2) qui s'étire au travers du carter-moteur jusqu'au carter d'huile de sorte que l'extrémité de ladite jauge graduée (3) soit dûment immergée dans l'huile, **caractérisé en ce que** ledit capteur de niveau (4) est placé sur ledit tube de guidage (2) et est calibré de manière à faire coïncider la valeur de résistance du capteur associée au niveau d'huile minimum (4a) et la valeur de résistance du capteur associée au niveau d'huile maximum (4b) avec les marques de niveau d'huile minimum (3a) et maximum (3b) sur la jauge (3) lorsqu'elle est complètement insérée dans le tube de guidage (2) afin de lire le niveau d'huile en correspondance avec les mêmes points.

2. Dispositif (1) selon la revendication 1, **caractérisé en ce que** lesdits moyens pour la mesure manuelle (3) et lesdits moyens pour la mesure automatique (4) sont adaptés pour mesurer le niveau d'huile sur les mêmes points de niveau minimum (3a, 4a) et niveau maximum (3b, 4b).

3. Dispositif (1) selon l'une quelconque des revendications précédentes, **caractérisé en ce que** lesdits moyens pour la mesure automatique (4) du niveau d'huile moteur comprennent au moins un capteur de niveau (4) du type à fil chaud.

4. Dispositif (1) selon une ou plusieurs revendications précédentes, **caractérisé en ce que** ledit capteur de niveau (4) est associé à une unité de commande électronique qui traite la valeur de résistance du capteur lui-même associée au niveau d'huile et l'envoie à son tour à un indicateur de niveau d'huile visible par le conducteur.

5. Dispositif (1) selon une ou plusieurs revendications précédentes, **caractérisé en ce que** ledit capteur de niveau (4) est associé à la surface externe dudit tube de guidage (2).

6. Dispositif (1) selon une ou plusieurs revendications précédentes, **caractérisé en ce que** ledit capteur de niveau (4) est associé de manière amovible à la surface externe dudit tube de guidage (2) de sorte à être facilement remplacé en cas de dysfonctionnement.
